# EUROPEAN PATENT SPECIFICATION

(11) **EP 1 024 075 B1**
(45) Date of publication and mention of the grant of the patent: **08.08.2001**
(21) Application number: 00100761.6
(22) Date of filing: 14.01.2000
(51) Int. Cl.: B62D 25/08, B60Q 1/04

(54) **Preassembled frontal assembly for vehicles**
Frontzusammenbau für ein Fahrzeug
Ensemble frontal préassemblé pour véhicules

(30) Priority: 26.01.1999 IT TO990050
(43) Date of publication of application: 02.08.2000
(73) Proprietor: MAGNETI MARELLI CLIMATIZZAZIONE S.p.A., 10046 Poirino (Torino) (IT)
(72) Inventor: Molari, Aurelio, Frazione Masio, 24, 10046 Poirino (IT); Garro, Lorenzo, Frazione Masio, 24, 10046 Poirino (IT)
(74) Representative: Marchitelli, Mauro

(56) References cited:
- EP-A- 0 449 241
- DE-A- 3 044 313
- DE-C- 3 629 124
- FR-A- 2 708 554

## Description

The present invention relates in general to assembling procedures for vehicles and relates more specifically to a preassembled frontal assembly.

It is known that for increasing the efficiency of an assembly line for vehicles there are used more and more frequently preassembled assemblies which form autonomous constructive units which are prepared outside of the vehicle assembly line. The present invention relates specifically to a preassembled frontal assembly including a transversal support structure on which there are assembled a plurality of individual components intended to be mounted on the frontal part of a vehicle. Typically, a preassembled frontal assembly carries a heat exchange group including a radiator with the respective fan assembly and possibly a condenser which can be associated to other components of an air conditioning system. The tendency of automobile manufacturers is to include in the preassembled frontal assembly also the headlights.

In order to simplify the assembly line, generally it is preferable to mount the preassembled frontal assembly on the vehicle by a relative movement along the direction of the longitudinal axis of the vehicle. In general it is impossible to mount a frontal assembly with preassembled headlights along the longitudinal axis of the vehicles when the vehicles have "wrap around" mudguards (that is rounded towards the frontal part of the vehicle). In these cases, either there are used headlights with movable lateral portions which have the drawback of a high cost or there are used headlights which do not have a rounded shape, which produce a bad result from the stylistic point of view. As a further alternative, it is possible to renounce to the preassembly of headlights on the frontal assembly and this involves the necessity of carrying out assembly and adjustment of plays between the vehicle body and headlights on the vehicle assembly line.

The object of the present invention is to provide a simple and effective solution enabling preassembled frontal assemblies to be mounted along the longitudinal axis of vehicles with "wrap-around" mudguards.

According with the present invention, this object is achieved by a preassembled frontal assembly having the features forming the subject of the main claim.

Characteristics and advantages of the present invention will become evident in the course of the detailed description which follows, given purely by way of non-limiting example, with reference to the attached drawings, in which:
- figure 1 is a plan schematic view showing part of a preassembled frontal assembly before it is mounted on a vehicle,
- figure 2 is a plan view similar to figure 1, showing an intermediate phase of the assembly procedure,
- figure 3 is a plan view showing the preassembled assembly of figures 1 and 2 mounted on the vehicle,
- figures 4 and 5 are partial frontal elevation views corresponding respectively to the position shown in figures 2 and 3,
- figure 6 is a plan schematic view showing pre-assembly and final assembly positions of a headlight, and
- figure 7 is a cross-section taken along the line VIII-VIII of figure 6.

With reference to the drawings, the numeral reference 10 indicates a preassembled frontal assembly including a transversal support structure 12 formed, in a way per se known, by sheared and/or pressed elements. A series of components such as the engine cooling assembly (radiator, air conveyor, electric fan, etc.) the condenser and possibly other components of the air conditioning system, etc. are preassembled on the support structure 12. In accordance with the invention, the support structure 12 carries also a pair of headlights 14, only one of which is visible in the figures.

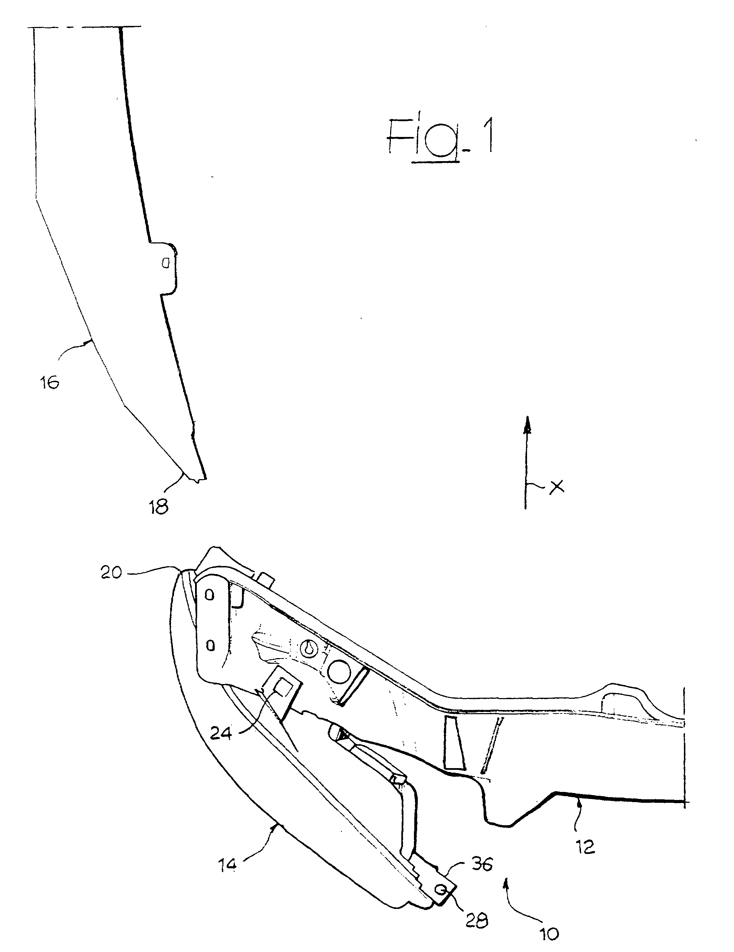

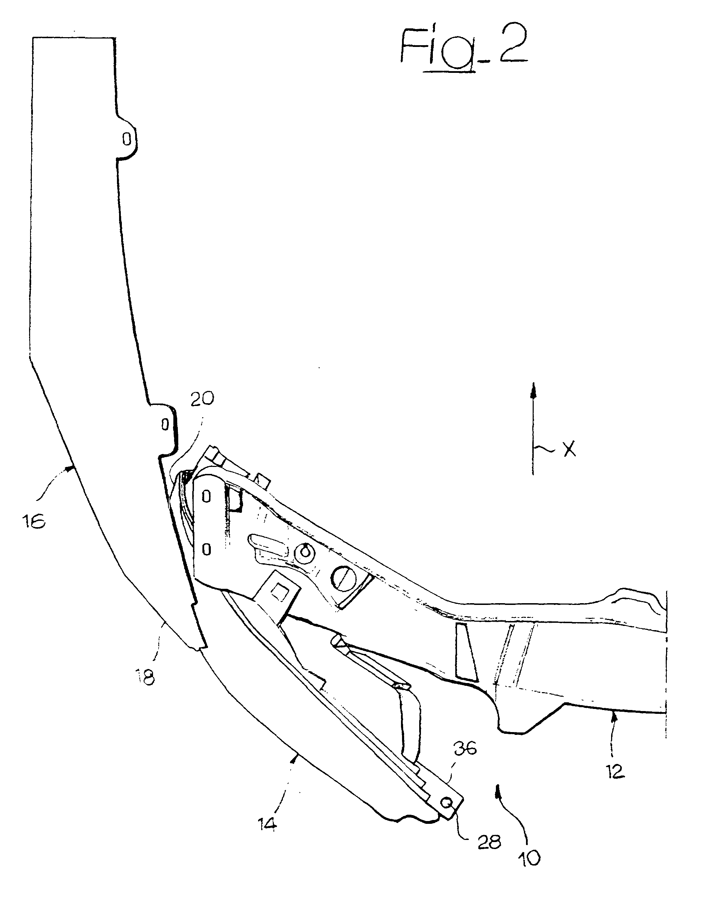

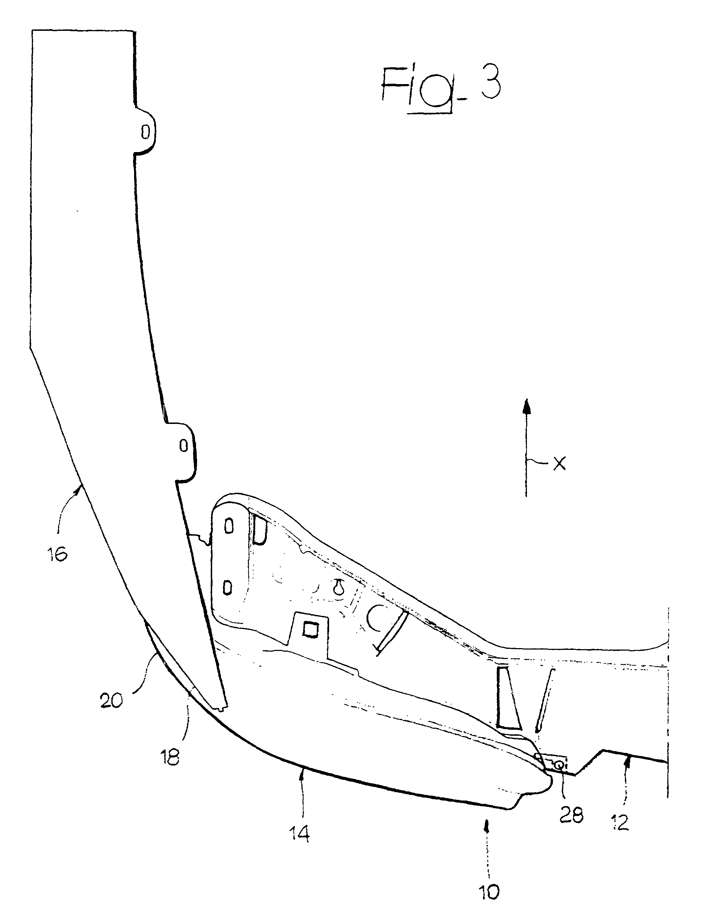

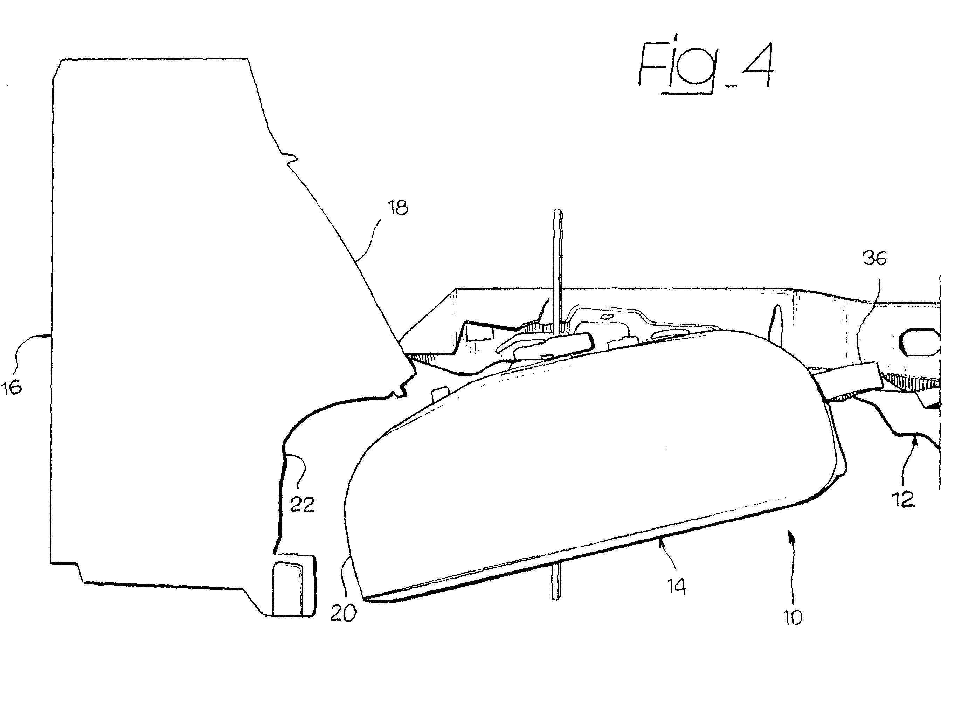

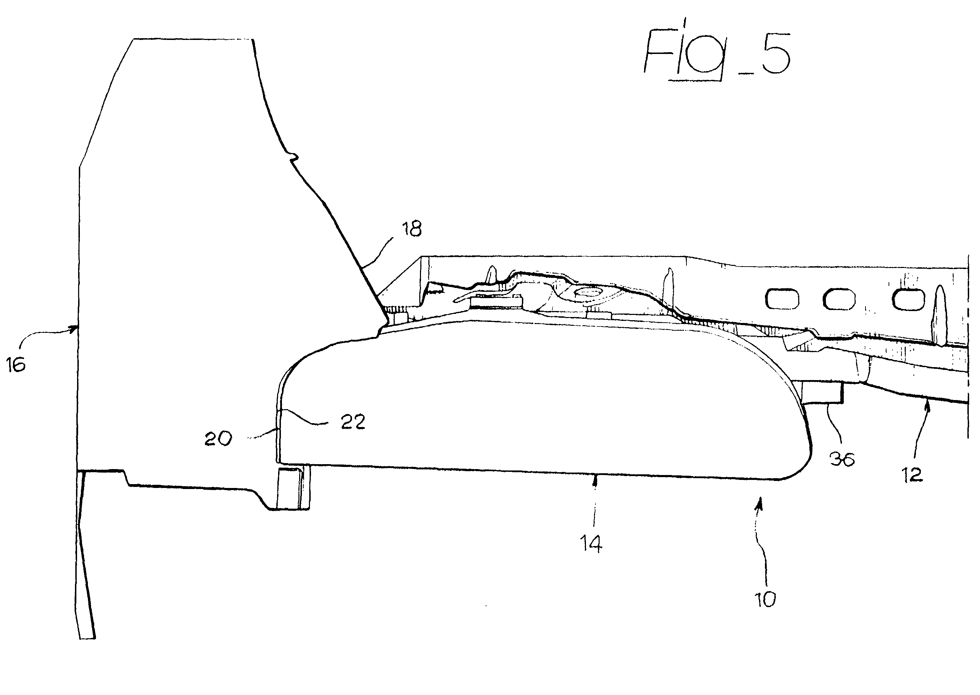

In figures 1 to 5 the numeral reference 16 indicates a lateral body panel which forms the mudguard of a respective front wheel. The vehicle is provided with a pair of lateral panels 16 arranged symmetrically with respect to each other and which define the lateral walls of the engine compartment. The preassembled assembly 10 is intended to be mounted on the vehicle with a movement in the direction of its longitudinal axis, indicated by the arrow X in figures 1 to 3. The lateral body panel 16 has a wrap-around front portion 18, that is rounded towards the front portion of the vehicle. Each of the headlights 14 has a lateral portion 20 with a wrap-around profile, that is rounded on the respective side of the vehicle. The lateral portion 20 of each headlight 14 is intended to be mounted in contact with the inner surface of the respective lateral body panel 16. Such mounting requires the positioning of the lateral portion 20 into a respective aperture 22 (figures 4 and 5) formed in the front portion 18 of the body panel 16. The rounded shape of both body panels 16 and headlights 14 would not allow the preassembled frontal assembly 10 to be mounted in the direction X if the headlights 14 where mounted on the supporting structure 12 in their final position.

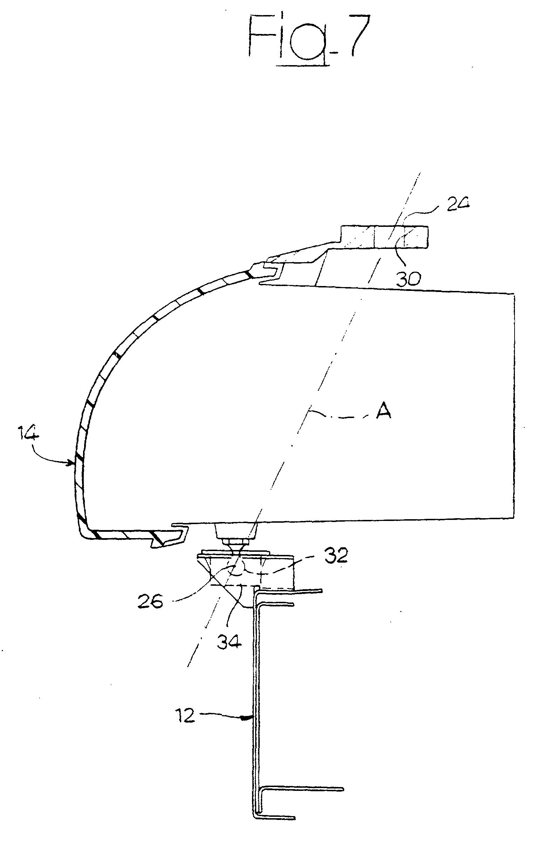

In accordance with the present invention, each headlight 14 is rotatably mounted on the support structure 12 about a slanting axis indicated A in figure 7. The axis A is contained in a vertical plane passing for an upper connecting point 24 and a lower connecting point 26 of the headlight 14. The upper connecting point 24 is shifted backwardly with respect to the lower connecting point 26. Both connecting points 24, 26 can make small adjustment movements with respect to the support structure along respective horizontal directions. Each headlight 14 is also provided with a third connecting point 28, spaced apart from the axis A (figures 1, 2, and 3), which serves for fixing the headlight in its final position.

The first connecting point 24 is formed by a flange fixed to the headlight 14 and provided with a slot 30 which is intended to be engaged by a screw (not shown). The second connecting point 26 is preferably formed by a spherical head 32 fixed to the headlight 12 and engaging a corresponding seat carried by a block 34 which is free to slide on the support structure 12 along a horizontal direction. The third connecting point 28 is simply formed by a hole intended to be engaged by a screw (not shown) and formed in a projecting portion 36 opposite to the rounded lateral portion 20 of the headlight 14.

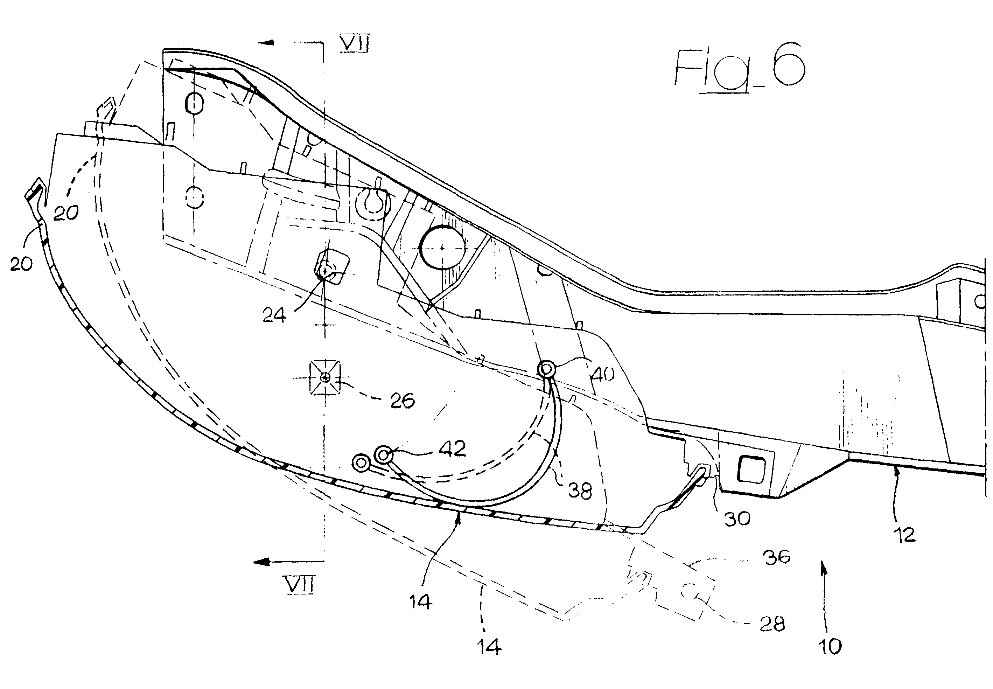

With reference to figure 6, an elastic element 38 has a first end 40 permanently connected to the support structure 12 and a second end 42 permanently connected to the headlight 14.

With reference to figures 1, 3 and 6, in the preassembly position the headlight 14 is connected to the support structure 12 through the connecting points 24 and 26 and through the elastic element 38. The third connecting point 28 is free and the first connecting point 24 (the slot 30) is engaged by a loose screw. The elastic element 38 maintains the headlight 14 in the position shown by broken line in figure 6. As it can be seen by comparing figures 1, 2 and 4, in the preassembly position the lateral portion 20 of the headlight 14 is shifted towards the internal part of the vehicle and downwardly. This allows the headlight 14 to be inserted through the aperture 22 of the lateral body panel 16.

After having inserted the frontal assembly 10 into the front portion of the vehicle, the support structure 12 is fixed to structural parts of the body in a known way and the headlights 14 are brought into their final assembly position by means of a rotation about the axis A so that the third connecting point represented by the hole 28 is brought in correspondence with a hole provided on the support structure 12. The hole 28 is engaged by a screw (not shown) and the loose screw engaging the first connecting point 24 is tightened. During the rotation about the axis A which brings the headlight 14 in its final assembly position, the elastic element 38 compensates plays and tolerances in a transversal direction and brings the lateral portion 20 of the headlight in contact with the inner surface of the frontal portion 18 of the lateral body panel 16. Such contact is preferably made through a rubber seal in order to obtain a perfect adherence of the headlight to the mudguard.

In the embodiment shown in figure 6, the elastic element is formed by a C-shaped spring. As an alternative, it could be formed by a straight deformable tie-rod or by a rigid tie-rod having elastic elements acting on one of its fixing points.

## Claims

1. Preassembled frontal assembly for vehicles, comprising a support structure (12) which is intended to be mounted on a vehicle with a movement along a longitudinal direction (X), said support structure (12) carrying at least one headlight (14) which, in the position of assembly on the vehicle, rests at least partially against the internal surface of a respective lateral body panel (16), characterized in that said headlight (14) is rotatably mounted on the support structure (12) between a preassembly and a final assembly position, about a slanting axis (A) passing for an upper connecting point (24) and a lower connecting point (26) of the headlight (14), wherein the upper connecting point (24) is shifted backwardly with respect to the lower connecting point (26), so that in the pre-assembly position a lateral zone (20) of the headlight (14) is shifted backwardly and downwardly with respect to the position of the same zone (20) in the final assembly position, and that said headlight comprises a third connecting point (28) for fixing the headlight in the final position.

2. Frontal assembly according to claim 1, characterized in that it comprises an elastic element (38) placed between the support structure (12) and the headlight (14).

3. Frontal assembly according to claim 1, characterized in that at least one of said connecting points (24, 26) comprises a spherical head (32 )engaged in a corresponding seat.

4. Frontal assembly according to claim 1, characterized in that at least one of said connecting points (24, 26) comprises a slot (30) which in said pre-assembly position is engaged by a loose screw.

5. Frontal assembly according to claim 1, characterized in that said third connecting point (28) is free in the preassembly position and is engaged by a screw for fixing the headlight (14) in the final assembly position.

## Patentansprüche

1. Vormontierter Frontzusammenbau für Fahrzeuge, umfassend eine Tragstruktur (12), die mittels einer Verschiebung in einer Längsrichtung (X) an einem Fahrzeug montiert werden soll, wobei die Tragstruktur (12) zumindest einen Scheinwerfer (14) trägt, der in Einbaustellung am Fahrzeug zumindest teilweise an der Innenfläche eines jeweiligen Seitenrumpfteils (16) anliegt,
dadurch gekennzeichnet, daß
der Scheinwerfer (14) an der Tragstruktur (12) zwischen einer vormontierten und einer endmontierten Position um eine geneigte Achse (A) drehbar befestigt ist, die durch einen oberen Verbindungspunkt (24) und einen unteren Verbindungspunkt (26) des Scheinwerfers (14) hindurchgeht, wobei der obere Verbindungspunkt (24) im Hinblick auf den unteren Verbindungspunkt (26) nach hinten versetzt ist, so daß eine Seitenzone (20) des Scheinwerfers (14) in der Vormontagestellung im Hinblick auf die Position derselben Zone (20) in der endmontierten Stellung nach hinten und unten versetzt ist, und daß der Scheinwerfer einen dritten Verbindungspunkt (28) zur Befestigung des Scheinwerfers in der endgültigen Position umfaßt.

2. Frontzusammenbau gemäß Anspruch 1, dadurch gekennzeichnet, daß er ein elastisches Element (38) umfaßt, das zwischen der Tragstruktur (12) und dem Scheinwerfer (14) angeordnet ist.

3. Frontzusammenbau gemäß Anspruch 1, dadurch gekennzeichnet, daß zumindest einer der Verbindungspunkte (24, 26) einen Kugelkopf (32) umfaßt, der in einen entsprechenden Sitz eingelassen ist.

4. Frontzusammenbau gemäß Anspruch 1, dadurch gekennzeichnet, daß zumindest einer der Verbindungspunkte (24, 26) einen Schlitz (30) umfaßt, in den in der Vormontagestellung eine lose Schraube eingreift.

5. Frontzusammenbau gemäß Anspruch 1, dadurch gekennzeichnet, daß der dritte Verbindungspunkt (28) in der vormontierten Position frei ist und in der endmontierten Position eine Schraube zur Befestigung des Scheinwerfers (14) darin eingreift.

## Revendications

1. Ensemble frontal préassemblé pour véhicules, comprenant une structure de support (12) qui est destinée à être montée sur un véhicule par un mouvement dans une direction longitudinale (X), ladite structure de support (12) supportant au moins un phare (14) qui, dans la position d'assemblage sur le véhicule, repose au moins partiellement contre la surface interne d'un panneau de carrosserie latéral (16) respectif, caractérisé en ce que ledit phare (14) est monté de manière rotative sur la structure de support (12) entre une position de préassemblage et une position d'assemblage finale, autour d'un axe incliné (A) passant par un point de liaison supérieur (24) et un point de liaison inférieur (26) du phare (14), dans lequel le point de liaison supérieur (24) est décalé vers l'arrière par rapport au point de liaison inférieur (26), de telle sorte que dans la position de préassemblage, une zone latérale (20) du phare (14) soit décalée vers l'arrière et vers le bas par rapport à la position de la même zone (20) dans la position d'assemblage finale, et en ce que ledit phare comprend un troisième point de liaison (28) pour fixer le phare dans la position finale.

2. Ensemble frontal selon la revendication 1, caractérisé en ce qu'il comprend un élément élastique (38) placé entre la structure de support (12) et le phare (14).

3. Ensemble frontal selon la revendication 1, caractérisé en ce qu'au moins l'un desdits points de liaison (24, 26) comprend une tête sphérique (32) en prise avec un appui correspondant.

4. Ensemble frontal selon la revendication 1, caractérisé en ce qu'au moins l'un desdits points de liaison (24, 26) comprend une fente (30) qui, dans ladite position de préassemblage, reçoit une vis non serrée.

5. Ensemble frontal selon la revendication 1, caractérisé en ce que ledit troisième point de liaison (28) est libre dans la position de préassemblage et reçoit une vis pour fixer le phare (14) dans la position d'assemblage finale.
